# EUROPEAN PATENT SPECIFICATION

(11) **EP 1 239 204 B1**
(45) Date of publication and mention of the grant of the patent: **14.12.2005**
(21) Application number: 02425129.0
(22) Date of filing: 06.03.2002
(51) Int. Cl.: F16K 27/02

(54) **valve to be used with water and steam with surface nickel-plating treatment**
Ventil für Wasser und Dampf mit Oberflächenickelplattierung
Soupape à utiliser avec de l'eau et de la vapeur avec traitement de nickelage de surface

(30) Priority: 08.03.2001 IT BS20010026 U
(43) Date of publication of application: 11.09.2002
(73) Proprietor: Olab S.r.l., 25030 Torbole Casaglia (Brescia) (IT)
(72) Inventor: Bottura, Olindo, 25125 Brescia (IT)
(74) Representative: Crippa, Paolo Ernesto

(56) References cited:
- EP-A- 0 148 018
- DE-A- 2 950 414
- US-A- 2 843 920
- US-A- 2002 157 520

## Description

The present finding relates to valves to be used in the distribution of water and steam, and is particularly referred to a solenoid valve having a brass body with a specific treatment of the surfaces in contact with the dispensed fluid.

Typically, solenoid valves have a brass body, and protective surface treatments are already known and applied to such solenoid valve bodies. Some of these treatments, such as galvanic nickel-plating treatments, basically have aesthetic functions, since they prevent the brass from oxidising, which would otherwise become dark and uneven, thus looking like a poor quality product.

Other treatments, such as chemical nickel-plating, impart a higher surface hardness to brass, thereby improving the abrasion resistance properties of the sublayer. Moreover, in the "alimentary" type, they reduce the yielding of lead contained into the alloy to the lapping fluids, thus making brass products suitable for use in the food field, since lead is a toxic heavy metal .

See, for example, documents US-A-2843920 and EP-A-0148018.

A considerable disadvantage of using brass devices in contact with water and/or steam, with or without one of the above surface treatments, is the formation of limestone scaling into ducts, especially in the proximity of hole intersections or of variations of diameter of the same. The phenomenon is particularly evident in the use at high temperatures, where scaling forms more rapidly. In more or less long periods, the formation of limestone determines a progressive decay of the functionality of said devices, which shows with a slow but inexorable capacity reduction, up to a total absence of functionality when the complete locking of the inside mobile parts is reached (mobile cores). Attempts have been made so far at improving the finishing of machined surfaces as much as possible to obviate the above problems, so as to obtain the least rough possible surfaces and provide the minimum adhesion to limestone scaling.

Purpose of the present finding is that of increasing as much as possible the operating life of valves with brass parts in contact with water or steam, adopting a surface treatment whose features had never been used with the aim of making machined surfaces refractory to the formation of limestone scaling.

The purpose is reached by applying a chemical nickel-plating treatment + PTFE to the above brass devices. An especially important example of the resulting improvement is that regarding solenoid valves. In fact, since these are often provided with very narrow inside passage orifices, with diameters of 1mm or even less, and with recesses of quite complex and irregular shape, they are more than other devices subject to progressive restrictions of the passage sections caused by limestone deposits, with consequent decay of their performance and of that of the equipment they are associated with. Tests carried out show that, operating conditions being equal, the average life (where life means the system operating period up to the complete clogging by limestone) of a solenoid valve subject to chemical nickel-plating + PTFE is approximately 3 - 4 times longer than that of an identical solenoid valve not subject to any treatment.

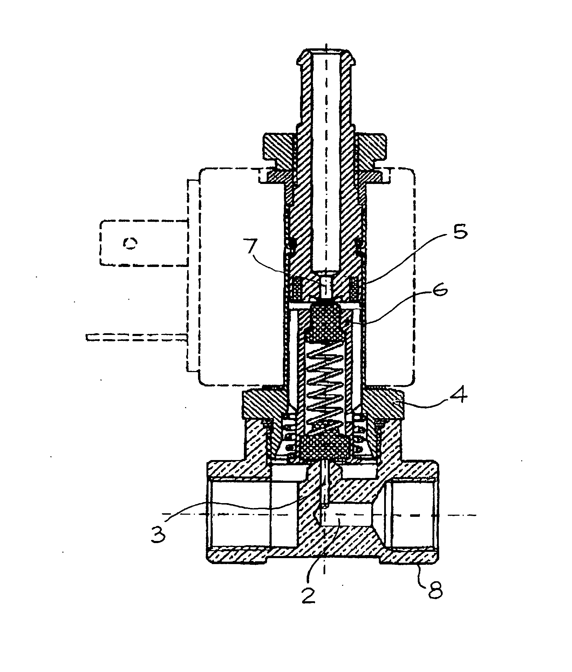

In the attached drawing, the only figure shows an example of a three-way solenoid valve the present finding can be applied to. In a device, the parts mainly subject to limestone scaling are the input connection 2, the calibrated orifice 3 (nominal diameter), the inside surface 4 of the sleeve 4, the mobile core 6 and the discharge orifice of the third way 7. The parts subject to chemical nickel-plating + PTFE are at least sleeve 4 and the entire body of solenoid valve 8.

It is clear that the same results and advantages are obtained also in other valves essentially made of brass, when subject to similar treatment.

## Claims

1. Solenoid valve having a body (8) and/or complementary components made of brass, in particular for the use with water and steam, said body (8) comprising a calibrated orifice (3) connecting an input connection (2) to an output connection of the body (8), said valve being **characterized in that** a protective coating of nickel-plating plus polytetrafluoroethylene (PTFE) is present on the surface of said orifice (3).

2. Solenoid valve according to claim 1, wherein said valve comprises a sleeve (4).

3. Solenoid valve according to claim 2, wherein said sleeve (4) is subjected to chemical nickel-plating + PTFE.

4. Solenoid valve according to any of claims 1-3, wherein said body (8) is subjected to chemical nickel-plating + PTFE.

5. Solenoid valve according to any of claims 1-4, wherein said valve comprises a third way having a discharge orifice (7).

6. Solenoid valve according to claim 5, wherein said discharge orifice (7) is subjected to chemical nickel-plating + PTFE.

7. Solenoid valve according to any of claims 1-6, wherein said valve comprises a mobile core (6).

8. Solenoid valve according to claim 7, wherein said mobile core (6) is subjected to chemical nickel-plating + PTFE.

9. A valve body made of brass, in particular for the use with water and steam, said body (8) comprising a calibrated orifice (3) connecting an input connection (2) to an output connection of the body (8), said body being **characterized in that** a protective coating of nickel-plating plus polytetrafluoroethylene (PTFE) is present on the surface of said orifice (3), making machined surfaces refractory to the formation of limestone scaling.

## Patentansprüche

1. Magnetventile mit einem Grundkörper (8) und/oder komplementären Komponenten (4, 6) bestehend aus Messing, insbesondere zur Verwendung mit Wasser und Dampf, wobei der genannte Grundkörper (8) einen kalibrierten Verbindungskanal (3) umfasst, der einen Eingangsanschluss (2) mit einem Ausgangsanschluss des Grundkörpers (8) verbindet, wobei das genannte Magnetventil **dadurch gekennzeichnet ist, dass** auf der Oberfläche des genannten Verbindungskanals (3) eine Schutzbeschichtung aus einer Vernickelung zuzüglich Polytretrafluorethylen (PTFE) vorhanden ist.

2. Magnetventil nach Anspruch 1, wobei das genannte Ventil eine Hülse (4) umfasst.

3. Magnetventil nach Anspruch 2, wobei die genannte Hülse (4) einer chemischen Vernickelung + PTFE unterworfen ist.

4. Magnetventil nach irgendeinem der Ansprüche 1 bis 3, wobei der genannte Grundkörper (8) einer chemischen Vernickelung + PTFE unterworfen ist.

5. Magnetventil nach irgendeinem der Ansprüche 1 bis 4, wobei das genannte Ventil einen weiteren Anschluss mit einem Auslasskanal (7) umfasst.

6. Magnetventil nach Anspruch 5, wobei der Auslasskanal (7) einer chemischen Vernickelung + PTFE unterworfen ist.

7. Magnetventil nach irgendeinem der Ansprüche 1 bis 6, wobei das genannte Ventil einen beweglichen Kern (6) umfasst.

8. Magnetventil nach Anspruch 7, wobei der genannte bewegliche Kern (6) einer chemischen Vernickelung + PTFE unterworfen ist.

9. Ventilkörper aus Messing, insbesondere für die Verwendung mit Wasser und Dampf, wobei der genannte Körper (8) einen kalibrierten Verbindungskanal (3) umfasst, der einen Eingangsanschluss (2) mit einem Ausgangsanschluss des Körpers (8) verbindet, wobei der genannte Körper **dadurch gekennzeichnet ist, dass** auf der Oberfläche der genannten Öffnung (3) eine Schutzbeschichtung aus einer Vernickelung zuzüglich Polytretrafluorethylen (PTFE) vorhanden ist, wodurch spanend bearbeitete Oberflächen beständig gegenüber der Bildung von Verkalkungen sind.

## Revendications

1. Electrovanne comportant un corps (8) et/ou des composants complémentaires (4, 6) faits en laiton, en particulier à utiliser avec de l'eau et de la vapeur, ledit corps (8) comprenant un orifice calibré (3) connectant un raccord d'entrée (2) à un raccord de sortie du corps (8), ladite vanne étant **caractérisée en ce qu'**un revêtement protecteur de placage de nickel plus du polytétrafluoroéthylène (PTFE) est présent sur la surface dudit orifice (3).

2. Electrovanne selon la revendication 1, dans laquelle ladite vanne comprend un manchon (4).

3. Electrovanne selon la revendication 2, dans laquelle ledit manchon (4) est soumis à un placage chimique de nickel + PTFE.

4. Electrovanne selon l'une quelconque des revendications 1 à 3, dans laquelle ledit corps (8) est soumis à un placage chimique de nickel + PTFE.

5. Electrovanne selon l'une quelconque des revendications 1 à 4, dans laquelle ladite vanne comprend une troisième voie comportant un orifice de décharge (7).

6. Electrovanne selon la revendication 5, dans laquelle ledit orifice de décharge (7) est soumis à un placage chimique de nickel + PTFE.

7. Electrovanne selon l'une quelconque des revendications 1 à 6, dans laquelle ladite vanne comprend un noyau mobile (6).

8. Electrovanne selon la revendication 7, dans laquelle ledit noyau mobile (6) est soumis à un placage chimique de nickel + PTFE.

9. Corps de vanne fait en laiton, en particulier à utiliser avec de l'eau et de la vapeur, ledit corps (8) comprenant un orifice étalonné (3) connectant un raccord d'entrée (2) à un raccord de sortie du corps (8), ledit corps étant **caractérisé en ce qu'**un revêtement protecteur de placage de nickel plus du polytétrafluoroéthylène (PTFE) est présent sur la surface dudit orifice (3), rendant les surfaces usinées réfractaires à la formation de tartre calcaire.
